# EUROPEAN PATENT APPLICATION

(11) **EP 4 668 629 A1**
(43) Date of publication of application: **24.12.2025**
(21) Application number: 23921713.6
(22) Date of filing: 14.02.2023
(51) Int. Cl.: H04L 1/18

(54) **HYBRID AUTOMATIC REPEAT REQUEST (HARQ) METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/076014
(87) International publication number: WO 2024/168545

(57) **Abstract**

Provided in an embodiment of the present disclosure is a hybrid automatic repeat request (HARQ) feedback method. The method is executed by a terminal, and the method comprises: in response to first downlink control information (DCI) scheduling transmission of at least two transport blocks (TBs), determining an HARQ state of an HARQ process used by each TB, wherein the HARQ state is an enabled state or a disabled state; and on the basis of the HARQ state, determining whether to execute HARQ feedback for the transmission of the TB. In the method, when it is determined that first DCI schedules transmission of at least two TBs, an HARQ state of an HARQ process used by each TB can be determined, and whether to execute HARQ feedback for the transmission of the TB is determined on the basis of the HARQ state. In this way, whether to execute HARQ feedback for the transmission of the TB can be adapted to the HARQ state, such that the situations where HARQ feedback is unreliable in a scenario where a delay occurs in a transmission can be reduced.

## Description

### TECHNICAL FIELD

The present disclosure relates to, but is not limited to, the field of wireless communication technologies, and in particular to a method and apparatus for hybrid automatic repeat request (HARQ) feedback, a communication device, and a storage medium.

### BACKGROUND

In wireless communication technologies, various communication scenarios are introduced, in which satellite communication is considered to be an important aspect of the future development of the wireless communication technologies. The satellite communication refers to communication performed by ground-based radio communication equipment using a satellite as a relay. A satellite communication system consists of a satellite part and a ground part. In a future wireless communication system, the satellite communication system and a terrestrial cellular communication system will gradually achieve deep integration and truly realize an intelligent connection of all things. Since the satellite communication system has a large delay, hybrid automatic repeat request (HARQ) blocking may occur for some devices.

### SUMMARY

Embodiments of the present disclosure disclose a method and an apparatus for hybrid automatic repeat request (HARQ) feedback, a communication device and a storage medium.

According to a first aspect of embodiments of the present disclosure, a method for HARQ feedback is provided. The method is performed by a terminal, and the method includes:
determining HARQ states of HARQ processes used by at least two transport blocks (TBs) in response to first downlink control information (DCI) scheduling transmissions of the at least two TBs, in which the HARQ state is an enabled state or a disabled state; and
determining whether to perform the HARQ feedback for the transmissions of the at least two TBs based on the HARQ states.

According to a second aspect of embodiments of the present disclosure, a method for HARQ feedback is provided. The method is performed by an access network device, and the method includes:
sending indication information to a terminal,
in which the indication information indicates HARQ states of HARQ processes used by at least two TBs for transmissions of the at least two TBs scheduled by first DCI, in which an HARQ state is an enabled state or an disabled state.

According to a third aspect of embodiments of the present disclosure, an apparatus for HARQ feedback is provided. The apparatus includes:
a determination module, configured to: determine HARQ states of HARQ processes used by at least two TBs in response to first DCI scheduling transmissions of the at least two TBs, in which an HARQ state is an enabled state or a disabled state; and determine whether to perform the HARQ feedback for the transmissions of the at least two TBs based on the HARQ states.

According to a fourth aspect of embodiments of the present disclosure, an apparatus for HARQ feedback is provided. The apparatus includes:
a sending module, configured to send indication information to a terminal,
in which the indication information indicates HARQ states of HARQ processes used by at least two TBs for transmissions of the at least two TBs scheduled by first DCI, in which an HARQ state is an enabled state or an disabled state.

According to a fifth aspect of embodiments of the present disclosure, a communication device is provided. The communication device includes:
a processor; and
a memory for storing instructions executable by the processor.

The processor is configured to implement the method described in any embodiment of the present disclosure when running the executable instructions.

According to a sixth aspect of embodiments of the present disclosure, a computer storage medium is provided. The computer storage medium stores a computer executable program, and when the executable program is executed by a processor, the method described in any embodiment of the present disclosure is implemented.

In the embodiments of the present disclosure, in response to the first DCI scheduling the transmissions of the at least two TBs, the HARQ states of the HARQ processes used by the at least two TBs are determined, in which the HARQ state is the enabled state or the disabled state; it is determined whether to perform the HARQ feedback for the transmissions of the at least two TBs based on the HARQ states. Here, when determining that the first DCI schedules the transmissions of at least two TBs, the HARQ states of the HARQ processes used by the at least two TBs will be determined, and based on the HARQ states, it will be determined whether to perform or not the HARQ feedback for the transmissions of the at least two TBs. In this way, whether to perform the HARQ feedback for the transmissions of the at least two TBs can be adapted to the HARQ states, which reduces the unreliable HARQ feedback situations that occur in the scenario of transmission delay.

### BRIEF DESCRIPTION OF THE DRAWINGS

Fig. 1 is a schematic structural diagram of a wireless communication system according to an example embodiment.
Fig. 2 is a schematic diagram of a data transmission according to an example embodiment.
Fig. 3 is a schematic diagram of a data transmission according to an example embodiment.
Fig. 4 is a schematic diagram of a data transmission according to an example embodiment.
Fig. 5 is a schematic flow chart of a method for HARQ feedback according to an example embodiment.
Fig. 6 is a schematic flow chart of a method for HARQ feedback according to an example embodiment.
Fig. 7 is a schematic flow chart of a method for HARQ feedback according to an example embodiment.
Fig. 8 is a schematic flow chart of a method for HARQ feedback according to an example embodiment.
Fig. 9 is a schematic flow chart of a method for HARQ feedback according to an example embodiment.
Fig. 10 is a schematic diagram of an apparatus for HARQ feedback according to an example embodiment.
Fig. 11 is a schematic diagram of an apparatus for HARQ feedback according to an example embodiment.
Fig. 12 is a schematic structural diagram of a terminal according to an example embodiment.
Fig. 13 is a block diagram of a base station according to an example embodiment.

### DETAILED DESCRIPTION

Reference will now be made in detail to example embodiments, examples of which are illustrated in the accompanying drawings. When the following description refers to the drawings, unless otherwise indicated, the same numbers in different drawings represent the same or similar elements. Implementations described in the following example embodiments do not represent all implementations consistent with the embodiments of the present disclosure. Rather, they are merely examples of apparatus and methods consistent with some aspects of the embodiments of the present disclosure as recited in the appended claims.

The terms used in the embodiments of the present disclosure are only for the purpose of describing specific embodiments and are not intended to limit the embodiments of the present disclosure. As used in the embodiments of the present disclosure and the appended claims, the singular forms "a", "an", and "the" are intended to include the plural forms as well, unless the context clearly indicates otherwise.

It should also be understood that the term "and/or" used herein refers to and encompasses any and all possible combinations of one or more of the associated listed items. It should be understood that although the terms first, second, third, etc. may be used to describe various information in the embodiments of the present disclosure, the information should not be limited to these terms. These terms are used only to distinguish information of the same type from one another. For example, without departing from the scope of the embodiments of the present disclosure, first information may also be referred to as second information, and similarly, the second information may also be referred to as the first information. The word "if" as used herein may be interpreted as "when" or "in a case that" or "in response to determining that" depending on the context.

For the purpose of brevity and ease of understanding, the terms "greater than" or "less than" are used herein to characterize size relationships. However, it can be understood by those skilled in the art that the term "greater than" also covers the meaning of "greater than or equal to", and "less than" also covers the meaning of "less than or equal to".

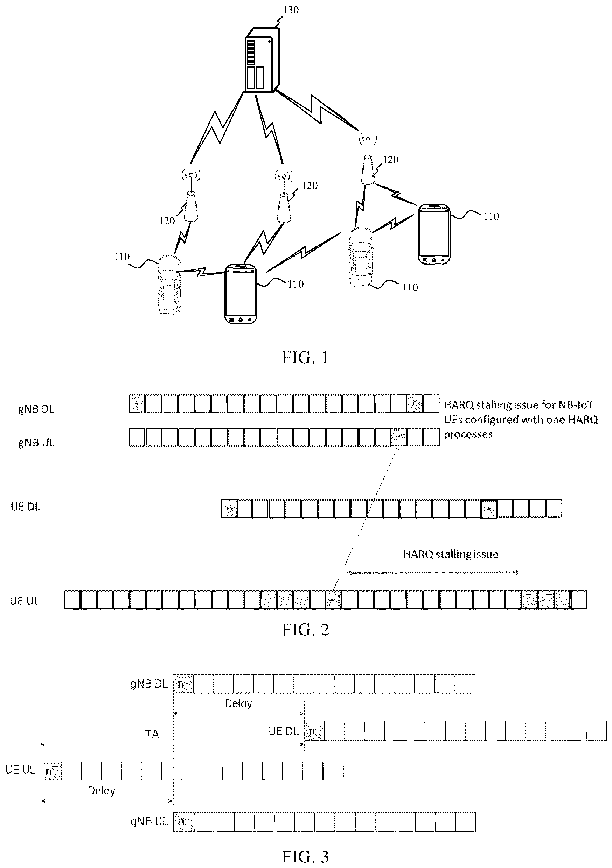

Please refer to FIG. 1, which shows a schematic structural diagram of a wireless communication system provided by an embodiment of the present disclosure.

As shown in FIG. 1, the wireless communication system is a communication system based on mobile communication technologies, and the wireless communication system may include a plurality of user equipments 110 and a plurality of base stations 120.

The user equipment 110 may be a device that provides voice and/or data connectivity to a user. The user equipment 110 may communicate with one or more core networks via a Radio Access Network (RAN). The user equipment 110 may be an IoT user equipment, such as a sensor device, a mobile phone, and a computer with an IoT user equipment. For example, it may be a fixed, portable, pocket-sized, handheld, computer-built-in, or vehicle-mounted device. For example, a station (STA), a subscriber unit, a subscriber station, a mobile station, a mobile, a remote station, an access point, a remote terminal, an access terminal, a user terminal, a user agent, a user device, or a user equipment. Alternatively, the user device 110 may also be a device of an unmanned aerial vehicle. Alternatively, the user device 110 may also be a vehicle-mounted device, for example, a driving computer with wireless communication function, or a wireless user device externally connected to the driving computer. Alternatively, the user equipment 110 may also be a roadside device, for example, a street lamp, a signal lamp, or other roadside device with a wireless communication function.

The base station 120 may be a network device in the wireless communication system. The wireless communication system may be a fourth generation mobile communication technology (4G) system, also known as a long term evolution (LTE) system; or the wireless communication system may be a 5G system, also known as a new air interface system or a 5G NR system. Alternatively, the wireless communication system may also be a next-generation system beyond the 5G system. An access network in the 5G system can be called a New Generation-Radio Access Network (NG-RAN).

The base station 120 may be an evolved base station (eNB) used in a 4G system. Alternatively, the base station 120 may also be a base station (gNB) adopting a centralized-distributed architecture in the 5G system. When the base station 120 adopts the centralized-distributed architecture, it generally includes a central unit (CU) and at least two distributed units (DU). The centralized unit is provided with a packet data convergence protocol (PDCP) layer, a radio link layer control protocol (RLC) layer, and a media access control (MAC) layer protocol stack. The distributed unit is provided with a Physical (PHY) layer protocol stack. The specific implementation of the base station 120 is not limited in the embodiments of the present disclosure.

A wireless connection may be established between the base station 120 and the user equipment 110 via a radio air interface. In different implementations, the radio air interface is a radio air interface based on the fourth generation mobile communication network technology (4G) standard, or the radio air interface is a radio air interface based on the fifth generation mobile communication network technology (5G) standard, for example, the radio air interface is a new radio air interface, or the radio air interface may also be a radio air interface based on the next generation mobile communication network technology standard beyond 5G.

In some embodiments, an End to End (E2E) connection may also be established between the user equipments 110. For example, the vehicle to vehicle (V2V) communication, the vehicle to infrastructure (V2I) communication, and the vehicle to pedestrian (V2P) communication in the vehicle to everything (V2X) communication are some of the scenarios.

Here, the above-mentioned user equipment may be considered as a terminal of the following embodiments.

In some embodiments, the wireless communication system may further include a network management device 130.

Several base stations 120 are connected to the network management device 130 respectively. The network management device 130 may be a core network device in the wireless communication system. For example, the network management device 130 may be a Mobility Management Entity (MME) in an Evolved Packet Core (EPC). Alternatively, the network management device may also be another core network device, such as a Serving GateWay (SGW), a Public Data Network GateWay (PGW), a Policy and Charging Rules Function (PCRF), or a Home Subscriber Server (HSS). The embodiments of the present disclosure do not limit the implementation form of the network management device 130.

In order to facilitate understanding by those skilled in the art, the embodiments of the present disclosure list multiple implementations to clearly illustrate the technical solutions of the embodiments of the present disclosure. Of course, those skilled in the art can understand that the multiple embodiments provided in the embodiments of the present disclosure may be executed individually, or may be executed together with the methods of other embodiments in the embodiments of the present disclosure, or may be executed alone or in combination with some methods in other the related art; which is not limited in the embodiments of the present disclosure.

In order to better understand the embodiments of the present disclosure, a wireless communication scenario is described below:

The continuous emergence of new Internet applications, such as Augmented Reality (AR), Virtual Reality (VR) and vehicle-to-vehicle communications, has put forward higher requirements for the wireless communication technologies, driving the continuous evolution of the wireless communication technologies to meet the needs of applications. Cellular mobile communication technology is in the evolution stage of a new generation of technology. An important feature of the new generation of technology is to support flexible configuration of multiple service types. Different service types have different requirements for the wireless communication technologies. For example, requirements of an Enhanced Mobile Broadband (eMBB) service type mainly focus on large bandwidth and high speed; requirements of an Ultra-reliable and Low Latency Communications (URLLC) service type mainly focus on higher reliability and low latency; requirements of a Massive Machine Type Communication (mMTC) service type mainly focus on a large number of connections. Therefore, the new generation of wireless communication system requires flexible and configurable designs to support the transmission of various types of services.

Among the research of the wireless communication technologies, satellite communication is considered to be an important aspect of the future development of the wireless communication technologies. The satellite communication refers to communication performed by a ground-based radio communication equipment using a satellite as a relay. A satellite communication system consists of a satellite part and a ground part. The characteristics of the satellite communication are: large communication range; communication can be carried out between any two points as long as they are within the range covered by the radio waves emitted by the satellite; not easily affected by land disasters (high reliability). As a supplement to the current ground-based cellular communication system, the satellite communication can have the following benefits. Extended coverage: for areas that cannot be covered by the current cellular communication system or where the coverage cost is high, such as oceans, deserts, remote mountainous areas, etc., the satellite communication can be used to solve communication problems. Emergency communication: in extreme situations, for example, disasters such as earthquakes, when cellular communications infrastructure is unavailable, the satellite communication can be used to quickly establish communications connections. Providing industry applications: for example, for delay-sensitive services in long-distance transmission, the satellite communication can be used to reduce the delay of service transmissions. It can be foreseen that in a future wireless communication system, the satellite communication system and a terrestrial cellular communication system will gradually achieve deep integration and truly realize an intelligent connection of all things.

Due to the large delay of the satellite communication system, an HARQ stalling problem may occur for some Internet of Things (IoT) devices, which reduces a transmission rate of the terminal. For details, please see Fig. 2. In order to avoid the HARQ stalling problem that reduces the system performance in the non-terrestrial network (NTN) scenario, there is introduced an HARQ disabling operation. That is, for a certain HARQ process, if the HARQ disabling is configured, the terminal does not feed back HARQ information for a downlink transmission of the HARQ process. For an IoT terminal, it supports semi-static configuration, such as indicating an HARQ enablement of a target HARQ process through an RRC signaling, and also supports dynamic indication, such as indicating the HARQ enablement of the target HARQ process through downlink control information (DCI).

In an embodiment, the terminal may receive the semi-static configuration of the base station to determine the state of the configured HARQ process. The terminal may also receive an indication of DCI, in which the DCI may change the state of the target HARQ process in the semi-static configuration.

In an embodiment, for a Narrow Band Internet of Things (NB-IoT) terminal, a maximum of two HARQ processes are supported. It also supports scheduling transmissions of two different TBs through one DCI. The different TBs may use different HARQ processes, and the states of the two HARQ processes may be the same (for example, both of the HARQ processes are HARQ enabled or HARQ disabled), or different (for example, HARQ process 1 is HARQ enabled, and HARQ process 2 is HARQ disabled). In this case, it is necessary to clearly indicate the HARQ states of the two HARQ processes through the DCI.

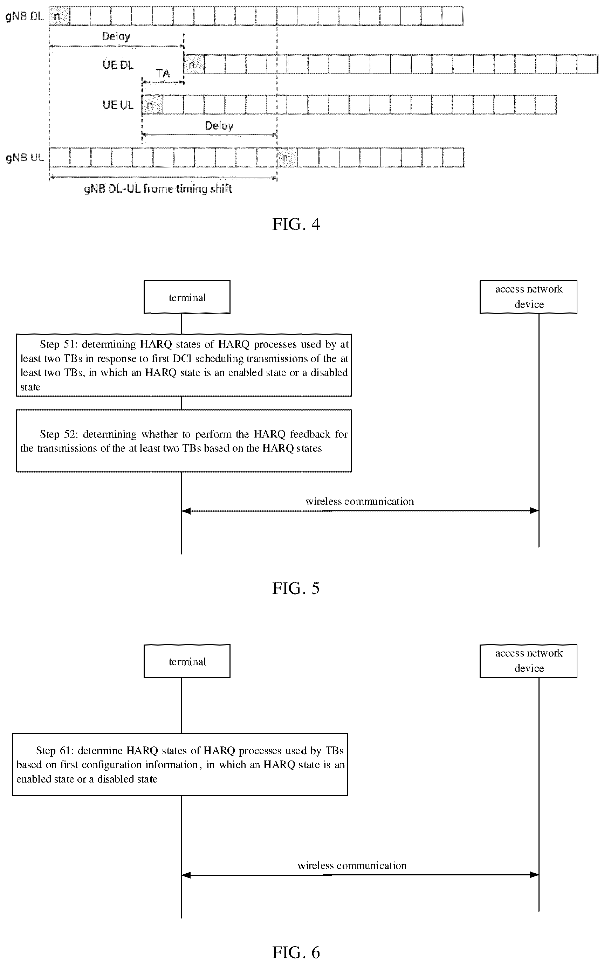

In an embodiment, in the satellite communication scenario, due to the long signal transmission distance between a transmitter and a receiver, data transmission takes a long time. For transmissions with uplink and downlink relationships, it is determined that the terminal needs to compensate for the transmission delay based on a configuration of the base station. Please refer to FIG. 3, which is a scenario where uplink and downlink timings on the base station are aligned. Please refer to FIG. 4, which is a scenario where the uplink and downlink timings on the base station are not aligned.

As shown in FIG. 5, an embodiment provides a method for HARQ feedback. The method is performed by a terminal, and the method includes:
Step 51: determining HARQ states of HARQ processes used by at least two TBs in response to first DCI scheduling transmissions of the at least two TBs, in which an HARQ state is an enabled state or a disabled state; and
Step 52: determining whether to perform the HARQ feedback for the transmissions of the at least two TBs based on the HARQ states.

Here, the terminal involved in the present disclosure may be but is not limited to a mobile phone, a wearable device, a vehicle-mounted terminal, a Road Side Unit (RSU), a smart home terminal, an industrial sensor device and/or a medical device, etc.

In some embodiments, the terminal may be a Redcap terminal or a new radio (NR) terminal of a predetermined version (e.g., an R17 NR terminal). The terminal may be an IoT device.

An access network device involved in the present disclosure may include various types of base stations, for example, a base station of the third-generation mobile communication (3G) network, a base station of a fourth-generation mobile communication (4G) network, a base stations of a fifth-generation mobile communication (5G) network, or other evolved base stations.

In a scenario of NTN communication, in response to the first DCI scheduling the transmissions of at least two TBs, the HARQ states of the HARQ processes used by the TBs are determined, in which an HARQ state is an enabled state or an disabled state; it is determined whether to perform the HARQ feedback for the transmissions of the TBs based on the HARQ states.

In an embodiment, in response to the first DCI scheduling the transmissions of two TBs, the HARQ states of the HARQ processes used by the TBs are determined, in which the TBs include a first TB and a second TB. An HARQ state of the first TB is the enabled state, and an HARQ state of the second TB is the disabled state. The HARQ feedback for the transmission of the first TB is performed, and the HARQ feedback for the transmission of the second TB is not performed.

In an embodiment, in response to the first DCI scheduling the transmissions of two TBs, the HARQ states of the HARQ processes used by the TBs are determined, in which the TB includes the first TB and the second TB. The HARQ state of the first TB is the enabled state, and the HARQ state of the second TB is the enabled state. The HARQ feedback for the transmission of the first TB is performed, and the HARQ feedback for the transmission of the second TB is performed.

In an embodiment, in response to the first DCI scheduling the transmissions of two TBs, the HARQ states of the HARQ processes used by the TBs are determined, in which the TB includes the first TB and the second TB. The HARQ state of the first TB is the disabled state, and the HARQ state of the second TB is the disabled state. The HARQ feedback for the transmission of the first TB is not performed, and the HARQ feedback for the transmission of the second TB is not performed.

In an embodiment, it is determined whether the first DCI schedules the transmissions of at least two TBs. In response to the first DCI scheduling the transmissions of at least two TBs, the HARQ states of the HARQ processes used by the TBs are determined; in which the HARQ state is the enabled state or the disabled state; it is determined whether to perform the HARQ feedback for the transmissions of the TBs based on the HARQ states.

In an embodiment, in response to the first DCI scheduling the transmissions of at least two TBs, the HARQ states of the HARQ processes used by the TBs are determined based on first configuration information, in which the HARQ state is the enabled state or the disabled state; and it is determined whether to perform the HARQ feedback for the transmissions of the TBs based on the HARQ states.

In an embodiment, the first configuration information sent by an access network device is received. In response to the first DCI scheduling the transmissions of at least two TBs, the HARQ states of the HARQ processes used by the TBs are determined based on the first configuration information, in which the HARQ state is the enabled state or the disabled state; and it is determined whether to perform the HARQ feedback for the transmissions of the TBs based on the HARQ states.

In an embodiment, in response to the first DCI scheduling the transmissions of at least two TBs, the HARQ states of the HARQ processes used by the TBs are determined based on a predetermined first configuration information, in which the HARQ state is the enabled state or the disabled state; and it is determined whether to perform the HARQ feedback for the transmissions of the TBs based on the HARQ states.

In an embodiment, in response to the first DCI scheduling the transmissions of at least two TBs, the HARQ states of the HARQ processes used by the TBs are determined based on the first configuration information agreed upon in a predetermined protocol, in which the HARQ state is the enabled state or the disabled state; and it is determined whether to perform the HARQ feedback for the transmissions of the TBs based on the HARQ states.

In an embodiment, indication information sent by the access network device is received, in which the indication information indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received via a first signaling. The first signaling is one of: DCI, a radio resource control (RRC) signaling, or a Media Access Control (MAC) Control Element (CE). The indication information indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states. It should be noted that the indication information may be configuration information for configuring the HARQ states.

In an embodiment, third configuration information sent by the access network device is received, in which the third configuration information indicates supporting to indicate the HARQ states of the HARQ processes through DCI. The indication information sent by the access network device is received, in which the indication information indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes an information field, and the information field indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ state, and a position of the information field in the indication information is a predetermined position or the position of the information field in the indication information is a configurable position. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ states, and a length of the information field in the indication information is a predetermined length, or the length of the information field in the indication information is a configurable length. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ states, and the information field includes an indication bit and the indication bit corresponds to a target HARQ process. In response to the indication bit indicating a first value, the HARQ state of the target HARQ process is configured as the enabled state, or in response to the indication bit indicating a second value, the HARQ state of the target HARQ process is configured as the disabled state; or in response to the indication bit indicating the first value, the HARQ state of the target HARQ process is modified, or in response to the indication bit indicating a second value, the HARQ state of the target HARQ process is not modified. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

As an example, the information field length of the indication field is 1 bit. The information field indicates an HARQ configuration operation of the target HARQ process in a predetermined configuration or currently indicated as HARQ disabling. For example, the indication field indicates "0", which means that the target HARQ process is configured as HARQ disabled; or the indication field indicates "1", which means that the target HARQ process is configured as HARQ enabled (the target HARQ process is an HARQ process in the predetermined configuration or currently indicated as HARQ disabling). Alternatively, the indication field indicates "0", which means that the HARQ state of the target HARQ process is modified or switched, and the indication field indicates "1", which means that the HARQ state of the target HARQ process is not modified or switched.

As an example, when the HARQ states of multiple HARQ processes are the HARQ disabled states, the 1-bit indication is for a predetermined HARQ process, such as the HARQ operation of HARQ process 0.

In an embodiment, the indication information sent by the access network device is received, in which the indication information indicates the HARQ states, the indication information includes the information field, the information field indicates the HARQ states, and the information field contains at least two indication bits, each of the indication bits corresponds to an HARQ process of one TB. In response to an indication bit indicating a first value, the HARQ state of a corresponding HARQ process is configured as the enabled state, or in response to an indication bit indicating a second value, the HARQ state of a corresponding HARQ process is configured as the disabled state; or in response to an indication bit indicating the first value, the HARQ state of a corresponding HARQ process is modified, or in response to an indication bit indicating the second value, the HARQ state of a corresponding HARQ process is not modified. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication bit indicates that the HARQ state of the HARQ process is configured as the enabled state or the disabled state; or the indication bit indicates that the HARQ state of the HARQ process is modified or not modified.

In an embodiment, a bit length contained of the indication bits is determined based on the maximum numerical count of TBs scheduled by a single piece of first DCI. It should be noted that the bit length may be represented by the numerical count of bits. If the indication bits includes 3 bits, the bit length is 3.

As an example, the information field length is N bits, where N is determined by the maximum numerical count of TBs that can be scheduled in one piece of DCI, and the configuration operation of the HARQ states of the multiple TBs scheduled is determined in a bitmapped manner.

For example, the terminal determines, based on the configuration information, that one piece of DCI can schedule the transmissions of up to 2 TBs, and the length of the information field is 2 bits. A low bit of information carried in the information field indicates an HARQ state of HARQ process 0 (a process of a first TB), and a high bit of the information carried in the information field indicates an HARQ state of HARQ process 1 (a process of a second TB).

In an embodiment, the indication information sent by the access network device is received, in which the indication information indicates the HARQ states, the indication information includes the information field, the information field indicates the HARQ states, and the information field includes the indication bit and the indication bit indicates the HARQ state of a predetermined HARQ process. In response to the first DCI scheduling the transmissions of at least two TBs, the HARQ state of the predetermined HARQ process used by the TB is determined based on the HARQ state of the predetermined HARQ process indicated by the indication information, in which the predetermined state is an enabled state or an disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ states, and the information field contains an indication bit and the indication bit indicates the HARQ state of an HARQ process in a predetermined state. In response to the first DCI scheduling the transmissions of at least two TBs, the HARQ state of the HARQ process in the predetermined state used by the TB is determined based on the HARQ state of the HARQ process in the predetermined state indicated by the indication information, in which the predetermined state is an enabled state or an disabled state; it is determined whether to perform the HARQ feedback for the transmissions of the TBs based on the HARQ states.

In an embodiment, a bit length of the indication bit is determined based on second configuration information.

As an example, the information field length is N bits, and the value of N is determined by the second configuration information. For example, the value of N is 2, which is set based on the second configuration information. Please refer to Table 1, which shows a corresponding relationship between a value of the indication bit and HARQ states of indicated predetermined HARQ processes. It should be noted that the predetermined HARQ process may be a pre-agreed HARQ process, and may be all or part of the HARQ processes selected from multiple HARQ processes. For example, four HARQ processes determined from five HARQ processes are HARQ process 0, HARQ process 1, HARQ process 2, and HARQ process 3. Correspondingly, the HARQ state of the pre-agreed HARQ process may also be agreed in advance, and the HARQ state of the predetermined HARQ process may be uniformly indicated by the indication bit. In this way, the terminal may determine the HARQ state of the predetermined HARQ process based on the indication bit. As shown in Table 1, when the value of the indication bit is "00", HARQ process 0 is set to disabled, HARQ process 1 is set to disabled, HARQ process 2 is set to disabled, and HARQ process 3 is set to disabled.

**Table 1:**

| value of indication bit | HARQ states of indicated predetermined HARQ processes |
|---|---|
| 00 | HARQ process 0 is disabled |
| | HARQ process 1 is disabled |
| | HARQ process 2 is disabled |
| | HARQ process 3 is disabled |
| 01 | HARQ process 0 is disabled |
| | HARQ process 1 is disabled |
| | HARQ process 2 is enabled |
| | HARQ process 3 is enabled |
| 10 | HARQ process 0 is disabled |
| | HARQ process 1 is enabled |
| 11 | HARQ process 0 is enabled |
| | HARQ process 1 is enabled |
| | HARQ process 2 is enabled |
| | HARQ process 3 is enabled |

In an embodiment, the indication information sent by the access network device is received, in which the indication information indicates the HARQ states. In response to the first DCI scheduling the transmissions of at least two TBs, the HARQ state of a target HARQ process is determined based on a numerical count of retransmissions indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states. In response to the first DCI scheduling the transmissions of at least two TBs, the HARQ state of the target HARQ process is determined based on the numerical count of retransmissions indicated by the indication information and a reference threshold, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states. In response to the first DCI scheduling the transmissions of at least two TBs, in response to the numerical count of retransmissions being greater than or equal to the reference threshold, it is determined that the HARQ state is the disabled state; and/or in response to the numerical count of retransmissions being less than the reference threshold, it is determined that the HARQ state is the enabled state. Based on the HARQ states, it is determined whether to perform the HARQ feedback for transmission of the TB.

In an embodiment, a predetermined signaling sent by the access network device is received, in which the predetermined signaling indicates the reference threshold. The indication information sent by an access network device is received, in which the indication information indicates the HARQ states. In response to the first DCI scheduling the transmissions of at least two TBs, the HARQ state of the target HARQ process is determined based on the numerical count of retransmissions indicated by the indication information and the reference threshold, in which the HARQ state is the enabled state or the disabled state; and it is determined whether to perform the HARQ feedback for the transmissions of the TBs based on the HARQ states.

In an embodiment, the predetermined signaling sent by the access network device is received, in which the predetermined signaling indicates the reference threshold. The indication information sent by the access network device is received, in which the indication information indicates the HARQ states. In response to the first DCI scheduling the transmissions of at least two TBs, the HARQ state of the target HARQ process is determined based on the numerical count of retransmissions indicated by the indication information and the reference threshold, in which the HARQ state is the enabled state or the disabled state; and it is determined whether to perform the HARQ feedback for the transmissions of the TBs based on the HARQ states. The predetermined signaling includes one of: an RRC signaling, an MAC CE signaling, or a physical layer signaling.

In an embodiment, the terminal determines the reference threshold in the predefined manner or by receiving the signaling from the base station, such as the RRC, the MAC CE or the physical layer signaling. When the numerical count of repetitions in the DCI is greater than or equal to the reference threshold, the terminal determines that the HARQ operation of the target HARQ process is configured as HARQ disabled. If the numerical count of repetitions in the DCI is less than the reference threshold, the terminal determines that the HARQ operation of the target HARQ process is configured as HARQ enabled.

In an embodiment, the target HARQ process includes one of: some HARQ processes among the HARQ processes for the transmissions of the at least two TBs scheduled by the first DCI; an HARQ process in the disabled state among the HARQ processes for the transmissions of the at least two TBs scheduled by the first DCI; an HARQ process with the smallest HARQ process number among the HARQ processes for the transmissions of the at least two TBs scheduled by the first DCI; or all HARQ processes for the transmissions of the at least two TBs scheduled by the first DCI.

In an embodiment of the present disclosure, in response to the first DCI scheduling the transmissions of at least two TBs, the HARQ states of the HARQ processes used by the TBs are determined, in which the HARQ state is the enabled state or the disabled state; and it is determined whether to perform the HARQ feedback for the transmissions of the TBs based on the HARQ states. Here, when determining that the first DCI schedules the transmission of at least two TBs, the HARQ states of the HARQ processes used by the TBs will be determined, and based on the HARQ states, it will be determined whether to perform or not the HARQ feedback for the transmissions of the TBs. In this way, whether to execute the HARQ feedback for the transmissions of the TBs can be adapted to the HARQ states, which reduces the unreliable HARQ feedback situations that occur in the scenario of transmission delay.

It should be noted that those skilled in the art can understand that the methods provided in the embodiments of the present disclosure can be executed alone or together with some methods in the embodiments of the present disclosure or some methods in related art.

As shown in FIG. 6, an embodiment provides a method for HARQ feedback. The method is performed by a terminal, and the method includes:
Step 61: determine HARQ states of HARQ processes used by TBs based on first configuration information,
in which an HARQ state is an enabled state or a disabled state.

In an embodiment, in response to the first DCI scheduling the transmissions of at least two TBs, the HARQ states of the HARQ processes used by the TBs are determined based on the first configuration information, in which the HARQ state is the enabled state or the disabled state; and it is determined whether to perform the HARQ feedback for the transmissions of the TBs based on the HARQ states.

In an embodiment, in response to the first DCI scheduling the transmissions of two TBs, the HARQ states of the HARQ processes used by the TBs are determined based on the first configuration information, in which the TBs include a first TB and a second TB, an HARQ state of the first TB is the enabled state, and an HARQ state of the second TB is the disabled state. The HARQ feedback for the transmission of the first TB is performed, and the HARQ feedback for the transmission of the second TB is not performed.

In an embodiment, in response to the first DCI scheduling the transmissions of two TBs, the HARQ states of the HARQ processes used by the TBs are determined based on the first configuration information, in which the TBs includes the first TB and the second TB, the HARQ state of the first TB is the enabled state, and the HARQ state of the second TB is the enabled state. The HARQ feedback for the transmission of the first TB is performed, and the HARQ feedback for the transmission of the second TB is performed.

In an embodiment, in response to the first DCI scheduling the transmissions of two TBs, the HARQ states of the HARQ processes used by the TBs are determined based on the first configuration information, in which the TB includes the first TB and the second TB, the HARQ state of the first TB is the disabled state, and the HARQ state of the second TB is the disabled state. The HARQ feedback for the transmission of the first TB is not performed, and the HARQ feedback for the transmission of the second TB is not performed.

It should be noted that those skilled in the art can understand that the method provided in the embodiments of the present disclosure can be executed alone or together with some methods in the embodiments of the present disclosure or some methods in the related art.

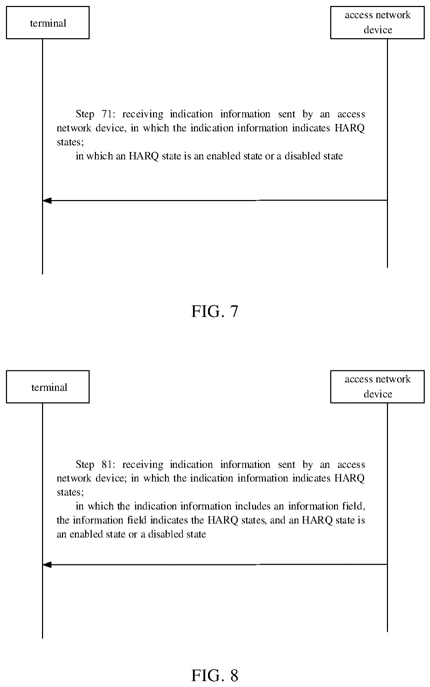

As shown in FIG. 7, an embodiment provides a method for HARQ feedback. The method is performed by a terminal, and the method includes:
Step 71: receiving indication information sent by an access network device, in which the indication information indicates HARQ states;
in which an HARQ state is an enabled state or a disabled state.

In an embodiment, the indication information sent by the access network device is received, in which the indication information indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states. In response to the first DCI scheduling the transmissions of two TBs, the HARQ states of the HARQ processes used by the TBs are determined based on the indication information; in which the TBs include a first TB and a second TB, an HARQ state of the first TB is the enabled state, and an HARQ state of the second TB is the disabled state. The HARQ feedback for the transmission of the first TB is performed, and the HARQ feedback for the transmission of the second TB is not performed.

In an embodiment, the indication information sent by the access network device is received, in which the indication information indicates the HARQ states. In response to the first DCI scheduling the transmissions of two TBs, the HARQ states of the HARQ processes used by the TBs are determined, in which the TBs include the first TB and the second TB, the HARQ state of the first TB is the enabled state, and the HARQ state of the second TB is an enabled state. The HARQ feedback for the transmission of the first TB is performed, and the HARQ feedback for the transmission of the second TB is performed.

In an embodiment, the indication information sent by the access network device is received, in which the indication information indicates the HARQ states. In response to the first DCI scheduling the transmissions of two TBs, the HARQ states of the HARQ processes used by the TBs are determined based on the indication information; in which the TBs include the first TB and the second TB, the HARQ state of the first TB is the disabled state, and the HARQ state of the second TB is the disabled state. The HARQ feedback for the transmission of the first TB is not performed, and the HARQ feedback for the transmission of the second TB is not performed.

In an embodiment, the indication information sent by the access network device is received via a first signaling, in which the first signaling is one of DCI, an RRC signaling or an MAC CE signaling, and the indication information indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

It should be noted that those skilled in the art can understand that the method provided in the embodiments of the present disclosure can be executed alone or together with some methods in the embodiments of the present disclosure or some methods in the related art.

As shown in FIG. 8, an embodiment provides a method for HARQ feedback. The method is performed by a terminal, and the method includes:
Step 81: receiving indication information sent by an access network device; in which the indication information indicates HARQ states;
in which the indication information includes an information field, the information field indicates the HARQ states, and an HARQ state is an enabled state or a disabled state.

In an embodiment, the indication information sent by the access network device is received, in which the indication information indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, third configuration information sent by the access network device is received, in which the third configuration information indicates supporting to indicate the HARQ states of the HARQ processes through DCI. The indication information sent by the access network device is received, in which the indication information indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes an information field, and the information field indicates the HARQ states. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, and the information field indicates the HARQ states, and a position of the information field in the indication information is a predetermined position or the position of the information field in the indication information is a configurable position. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ states, and a length of the information field in the indication information is a predetermined length or the length of the information field in the indication information is a configurable length. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ states, the information field includes an indication bit, and the indication bit corresponds to a target HARQ process. In response to the indication bit indicating a first value, the HARQ state of the target HARQ process is configured to be the enabled state, or in response to the indication bit indicating a second value, the HARQ state of the target HARQ process is configured to be the disabled state; or in response to the indication bit indicating the first value, the HARQ state of the target HARQ process is modified, or in response to the indication bit indicating the second value, the HARQ state of the target HARQ process is not modified. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ states, and the information field includes at least two indication bits, each of the indication bits corresponds to an HARQ process of one TB. In response to the indication bit indicating the first value, the HARQ state of a corresponding HARQ process is configured to be the enabled state, or in response to the indication bit indicating the second value, the HARQ state of a corresponding HARQ process is configured as the disabled state; or in response to the indication bit indicating the first value, the HARQ state of the HARQ process is modified, or in response to the indication bit indicating the second value, the HARQ state of the HARQ process is not modified. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ states, and the information field includes at least two indication bits, each of the indication bits corresponds to an HARQ process of one TB. In response to the indication bit indicating the first value, the HARQ state of the HARQ process is configured to be the enabled state, or in response to the indication bit indicating the second value, the HARQ state of the HARQ process is configured as the disabled state; or in response to the indication bit indicating the first value, the HARQ state of the HARQ process is modified, or in response to the indication bit indicating the second value, the HARQ state of the HARQ process is not modified. In response to the first DCI scheduling the transmissions of at least two TBs, the HARQ states of the HARQ processes used by the TBs are determined based on the HARQ states indicated by the indication information, in which the HARQ state is the enabled state or the disabled state; and it is determined whether to perform the HARQ feedback for the transmissions of the TBs based on the HARQ states. The bit length of the indication bit is determined based on the maximum numerical count of TBs scheduled by a single piece of first DCI.

In an embodiment, the indication information sent by the access network device is received, in which the indication information indicates the HARQ states, the indication information includes the information field, the information field indicates the HARQ states, the information field includes an indication bit, and the indication bit indicates the HARQ state of a predetermined HARQ process. In response to the first DCI scheduling the transmissions of at least two TBs, the HARQ state of the predetermined HARQ process used by the TB is determined based on the HARQ state of the predetermined HARQ process indicated by the indication information, in which the predetermined state is the enabled state or the disabled state; it is determined whether to perform the HARQ feedback for the transmissions of the TBs based on the HARQ states.

In an embodiment, the indication information sent by the access network device is received, in which the indication information indicates the HARQ states, the indication information includes the information field, the information field indicates the HARQ states, the information field includes the indication bit, and the indication bit indicates the HARQ state of an HARQ process in a predetermined state. In response to the first DCI scheduling the transmissions of at least two TBs, the HARQ state of the HARQ process in the predetermined state used by the TB is determined based on the HARQ state of the HARQ process in the predetermined state indicated by the indication information, in which the predetermined state is the enabled state or the disabled state; it is determined whether to perform the HARQ feedback for the transmissions of the TBs based on the HARQ states.

In an embodiment, a bit length of the indication bit is determined based on second configuration information.

In an embodiment, the indication information sent by the access network device is received, in which the indication information indicates the HARQ states. In response to the first DCI scheduling the transmissions of at least two TBs, an HARQ state of a target HARQ process is determined based on the numerical count of retransmissions indicated by the indication information, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states. In response to the first DCI scheduling the transmissions of at least two TBs, the HARQ state of the target HARQ process is determined based on the numerical count of retransmissions indicated by the indication information and a reference threshold, in which the HARQ state is the enabled state or the disabled state; and it is determined whether to perform the HARQ feedback for the transmissions of the TBs based on the HARQ states.

In an embodiment, the indication information sent by the access network device is received, in which the indication information indicates the HARQ states. In response to the first DCI scheduling the transmissions of at least two TBs, in response to the numerical count of retransmissions being greater than or equal to the reference threshold, it is determined that the HARQ state is the disabled state; and/or in response to the numerical count of retransmissions being less than the reference threshold, it is determined that the HARQ state is the enabled state. Based on the HARQ states, it is determined whether to perform the HARQ feedback for the transmissions of the TBs.

In an embodiment, a predetermined signaling sent by the access network device is received, in which the predetermined signaling indicates the reference threshold. The indication information sent by the access network device is received, in which the indication information indicates the HARQ states. In response to the first DCI scheduling the transmissions of at least two TBs, the HARQ state of the target HARQ process is determined based on the numerical count of retransmissions indicated by the indication information and the reference threshold, in which the HARQ state is the enabled state or the disabled state; and it is determined whether to perform the HARQ feedback for the transmissions of the TBs based on the HARQ states.

In an embodiment, the predetermined signaling sent by the access network device is received, in which the predetermined signaling indicates the reference threshold. The indication information sent by the access network device is received, in which the indication information indicates the HARQ states. In response to the first DCI scheduling the transmissions of at least two TBs, the HARQ state of the target HARQ process is determined based on the numerical count of retransmissions indicated by the indication information and the reference threshold, in which the HARQ state is the enabled state or the disabled state; and it is determined whether to perform the HARQ feedback for the transmissions of the TBs based on the HARQ states. The predetermined signaling includes one of: an RRC signaling, an MAC CE signaling, or a physical layer signaling.

It should be noted that those skilled in the art can understand that the method provided in the embodiments of the present disclosure can be executed alone or together with some methods in the embodiments of the present disclosure or some methods in the related art.

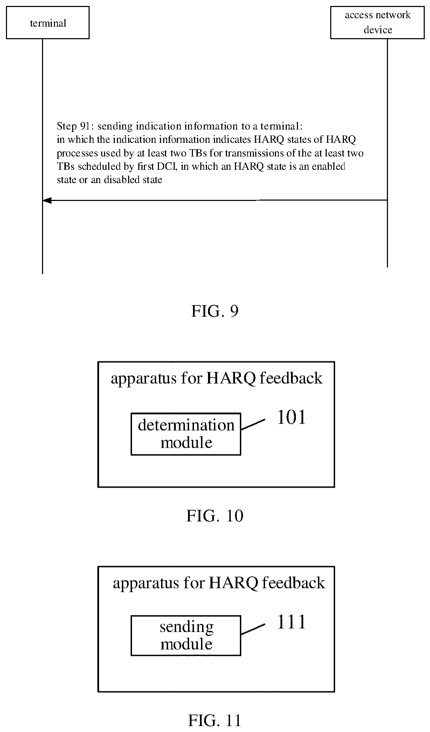

As shown in FIG. 9, an embodiment provides a method for HARQ feedback. The method is performed by an access network device, and the method includes:
Step 91: sending indication information to a terminal;
in which the indication information indicates HARQ states of HARQ processes used by at least two TBs for transmissions of the at least two TBs scheduled by first DCI, in which an HARQ state is an enabled state or an disabled state.

Here, the terminal involved in the present disclosure may be but is not limited to a mobile phone, a wearable device, a vehicle-mounted terminal, an RSU, a smart home terminal, an industrial sensor device and/or a medical device, etc.

In some embodiments, the terminal may be a Redcap terminal or a new radio NR terminal of a predetermined version (e.g., an R17 NR terminal). The terminal may be an IoT device.

The access network device involved in the present disclosure may be various types of base stations, for example, a base station of a 3G network, a base stations of a 4G network, a base station of a 5G network, or other evolved base stations.

In an embodiment, the indication information is sent to the terminal via a first signaling, in which the first signaling included one of: DCI, an RRC signaling, or an MAC CE signaling. The indication information indicates the HARQ states. In response to the first DCI scheduling the transmissions of at least two TBs, the terminal determines the HARQ states of the HARQ processes used by the TBs based on the HARQ states indicated by the indication information, in which the HARQ state is the enabled state or the disabled state; and it is determined whether to perform the HARQ feedback for the transmissions of the TBs based on the HARQ states.

In an embodiment, the indication information is sent to the terminal, in which the indication information indicates the HARQ states of the HARQ processes used by the at least two TBs for transmissions of the TBs scheduled by the first DCI, the indication information includes an information field, the information field indicates the HARQ states, and a position of the information field in the indication information is a predetermined position, or the position of the information field in the indication information is a configurable position.

In an embodiment, the indication information is sent to the terminal, in which the indication information indicates the HARQ states of the HARQ processes used by the at least two TBs for transmissions of the TBs scheduled by the first DCI, the indication information includes the information field, the information field indicates the HARQ states, and a length of the information field in the indication information is a predetermined length, or the length of the information field in the indication information is a configurable length.

In an embodiment, the indication information is sent to the terminal, in which the indication information indicates the HARQ states of the HARQ processes used by the at least two TBs for transmissions of the TBs scheduled by the first DCI, the indication information includes the information field, the information field indicates the HARQ states, the information field includes an indication bit, and the indication bit corresponds to a target HARQ process. In response to the indication bit indicating a first value, the HARQ state of the target HARQ process is configured as the enabled state, or in response to the indication bit indicating a second value, the HARQ state of the target HARQ process is configured as the disabled state; or in response to the indication bit indicating the first value, the HARQ state of the target HARQ process is modified, or in response to the indication bit indicating the second value, the HARQ state of the target HARQ process is not modified.

As an example, the information field length of the indication field is 1 bit. The information field indicates an HARQ configuration operation of the target HARQ process in a predetermined configuration or currently indicated as HARQ disabling. For example, the indication field indicates "0", which means that the target HARQ process is configured as HARQ disabled; or the indication field indicates "1", which means that the target HARQ process is configured as HARQ enabled (the target HARQ process is an HARQ process in the predetermined configuration or currently indicated as HARQ disabling). Alternatively, the indication field indicates "0", which means that the HARQ state of the target HARQ process is modified or switched, and the indication field indicates "1", which means that the HARQ state of the target HARQ process is not modified or switched.

As an example, when the HARQ states of multiple HARQ processes are the HARQ disabled states, the 1-bit indication is for a predetermined HARQ process, such as the HARQ operation of HARQ process 0.

In an embodiment, the indication information is sent to the terminal, in which the indication information indicates the HARQ states of the HARQ processes used by the at least two TBs for transmissions of the TBs scheduled by the first DCI, the indication information includes the information field, the information field indicates the HARQ states, and the information field contains at least two indication bits, each of the indication bits corresponds to an HARQ process of one TB. In response to an indication bit indicating a first value, the HARQ state of a corresponding HARQ process is configured as the enabled state, or in response to an indication bit indicating a second value, the HARQ state of a corresponding HARQ process is configured as the disabled state; or in response to an indication bit indicating the first value, the HARQ state of a corresponding HARQ process is modified, or in response to an indication bit indicating the second value, the HARQ state of a corresponding HARQ process is not modified..

In an embodiment, the indication information is sent to the terminal, in which the indication information indicates the HARQ states of the HARQ processes used by the at least two TBs for transmissions of the TBs scheduled by the first DCI, the indication information includes the information field, the information field indicates the HARQ states, the information field contains at least two indication bits, each of which corresponds to an HARQ process of one TB. In response to the indication bit indicating the first value, the HARQ state of the HARQ process is configured as the enabled state, or in response to the indication bit indicating the second value, the HARQ state of the HARQ process is configured as the disabled state; or in response to the indication bit indicating the first value, the HARQ state of the HARQ process is modified, or in response to the indication bit indicating the second value, the HARQ state of the HARQ process is not modified.

As an example, the information field length is N bits, where N is determined by the maximum numerical count of TBs that can be scheduled in one piece of DCI, and the configuration operation of the HARQ states of the multiple TBs scheduled is determined in a bitmapped manner.

For example, the terminal determines, based on the configuration information, that one piece of DCI can schedule the transmissions of up to 2 TBs, and the length of the information field is 2 bits. A low bit of information carried in the information field indicates an HARQ state of HARQ process 0 (a process of a first TB), and a high bit of the information carried in the information field indicates an HARQ state of HARQ process 1 (a process of a second TB).

In an embodiment, the indication information is sent to the terminal, in which the indication information indicates the HARQ states of the HARQ processes used by the at least two TBs for transmissions of the TBs scheduled by the first DCI, the indication information includes the information field, the information field indicates the HARQ states, the information field includes an indication bit, and the indication bit indicates the HARQ state of a predetermined HARQ process.

In an embodiment, the indication information is sent to the terminal, in which the indication information indicates the HARQ states of the HARQ processes used by the at least two TBs for transmissions of the TBs scheduled by the first DCI, the indication information includes the information field, the information field indicates the HARQ states, the information field contains the indication bit, and the indication bit indicates the HARQ state of an HARQ process in a predetermined state.

As an example, the information field length is N bits, and the value of N is determined by second configuration information. For example, the value of N is 2, which is set based on the second configuration information. Please refer to Table 1, which shows a corresponding relationship between a value of the indication bit and HARQ states of indicated predetermined HARQ processes.

In an embodiment, a predetermined signaling is sent to the terminal, in which the predetermined signaling indicates a reference threshold, and the reference threshold is used to determine the HARQ state. The indication information is sent to the terminal, in which the indication information indicates the HARQ states of the HARQ processes used by the TBs for transmitting at least two TBs scheduled by the first DCI.

The predetermined signaling includes one of: an RRC signaling, an MAC CE signaling, or a physical layer signaling.

In an embodiment, the terminal determines the reference threshold in the predefined manner or by receiving the signaling from the base station, such as the RRC, the MAC CE or the physical layer signaling. When the numerical count of repetitions in the DCI is greater than or equal to the reference threshold, the terminal determines that the HARQ operation of the target HARQ process is configured as HARQ disabled. If the numerical count of repetitions in the DCI is less than the reference threshold, the terminal determines that the HARQ operation of the target HARQ process is configured as HARQ enabled.

In an embodiment, the target HARQ process includes one of: some HARQ processes among the HARQ processes for the transmissions of the at least two TBs scheduled by the first DCI; an HARQ process in the disabled state among the HARQ processes for the transmissions of the at least two TBs scheduled by the first DCI; an HARQ process with the smallest HARQ process number among the HARQ processes for the transmissions of the at least two TBs scheduled by the first DCI; or all HARQ processes for the transmissions of the at least two TBs scheduled by the first DCI.

In an embodiment, third configuration information is sent to the terminal; in which the third configuration information indicates supporting to indicate the HARQ state of the HARQ process through DCI. The indication information is sent to the terminal, in which the indication information indicates the HARQ states of the HARQ processes used by the at least two TBs for transmissions of the TBs scheduled by the first DCI, in which the HARQ state is the enabled state or the disabled state.

It should be noted that those skilled in the art can understand that the method provided in the embodiments of the present disclosure can be executed alone or together with some methods in the embodiments of the present disclosure or some methods in the related art.

As shown in FIG. 10, an embodiment of the present disclosure provides an apparatus for HARQ feedback. The apparatus includes:
a determination module 101, configured to: determine HARQ states of HARQ processes used by at least two TBs in response to first DCI scheduling transmissions of the at least two TBs, in which an HARQ state is an enabled state or a disabled state; and determine whether to perform the HARQ feedback for the transmissions of the at least two TBs based on the HARQ states.

It should be noted that those skilled in the art can understand that the method performed by the apparatus provided in this embodiment of the present disclosure can be executed alone or together with some methods in the embodiments of the present disclosure or some methods in the related art.

As shown in FIG. 11, an embodiment of the present disclosure provides an apparatus for HARQ feedback. The apparatus includes:
a sending module 111, configured to send indication information to a terminal;
in which the indication information indicates HARQ states of HARQ processes used by at least two TBs for transmissions of the at least two TBs scheduled by first DCI, in which an HARQ state is an enabled state or an disabled state.

It should be noted that those skilled in the art can understand that the method performed by the apparatus provided in this embodiments of the present disclosure can be executed alone or together with some methods in the embodiments of the present disclosure or some methods in the related art.

The embodiments of the present disclosure provide a communication device. The communication device includes:
a processor; and
a memory for storing processor-executable instructions.

The processor is configured to perform the method of any embodiment of the present disclosure when running the executable instructions.

The processor may include various types of storage media, which are non-temporary computer storage media that can continue to memorize information stored thereon after the communication device loses power.

The processor may be connected to the memory via a bus or the like to read the executable program stored in the memory.

The embodiments of the present disclosure further provide a computer storage medium. The computer storage medium stores a computer executable program, and when the executable program is executed by a processor, the method of any embodiment of the present disclosure is implemented.

Regarding the device in the above embodiments, the specific manner in which each module performs operations has been described in detail in the embodiments of the methods, and will not be elaborated here.

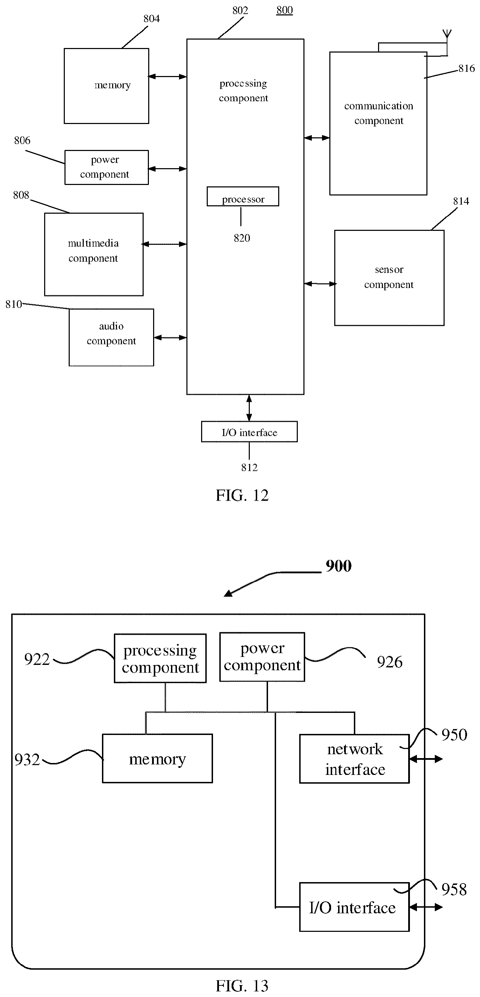

As shown in FIG. 12, an embodiment of the present disclosure provides a structure of a terminal. Referring to FIG. 12, the present embodiment provides a terminal 800, which may be a mobile phone, a computer, a digital broadcast terminal, a message transceiver, a game console, a tablet device, a medical device, a fitness device, a personal digital assistant, etc.

Referring to FIG. 12, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to generate all or part of the steps of the above methods. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the terminal 800. Examples of such data include instructions for any application or method operating on the terminal 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power supply component 806 provides power to various components of the terminal 800. The power component 806 may include a power management system, one or more power supplies, and other components associated with generating, managing, and distributing power for the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation. In some embodiments, the multimedia component 808 includes a front-facing camera and/or a rear-facing camera. When the terminal 800 is in an operation mode, such as a photographing mode or a video mode, the front camera and/or the rear camera may receive external multimedia data. Each of the front-facing camera and the rear-facing camera may be a fixed optical lens system or may have variable focal length and optical zoom capabilities.

The audio component 810 is configured to output and/or input audio signals. For example, the audio component 810 includes a microphone (MIC) configured to receive an external audio signal when the terminal 800 is in an operation mode, such as a call mode, a recording mode, and a speech recognition mode. The received audio signal may be further stored in the memory 804 or transmitted via the communication component 816. In some embodiments, the audio component 810 also includes a speaker for outputting audio signals.

The I/O interface 812 provides an interface between the processing component 802 and a peripheral interface module, which may be a keyboard, a click wheel, a button, etc. These buttons may include, but are not limited to: a home button, a volume button, a start button, and a lock button.

The sensor component 814 includes one or more sensors for providing state assessment of various aspects for the terminal 800. For example, the sensor component 814 may detect the open/closed state of the device 800, the relative positioning of components, such as the display and keypad of the terminal 800, the sensor component 814 may also detect the position change of the terminal 800 or a component of the terminal 800, the presence or absence of user contact with the terminal 800, the orientation or acceleration/deceleration of the terminal 800 and the temperature change of the terminal 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communications between the terminal 800 and other devices. The terminal 800 may access a wireless network based on communication standards, such as WiFi, 2G or 3G, or a combination thereof. In an example embodiment, the communication component 816 receives a broadcast signal or broadcast-related information from an external broadcast management system via a broadcast channel. In an example embodiment, the communication component 816 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an example embodiment, the terminal 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, there is also provided a non-transitory computer-readable storage medium including instructions, such as the memory 804 including instructions, and the above instructions may be executed by the processor 820 of the terminal 800 to generate the above methods. For example, the non-transitory computer-readable storage medium may be a ROM, a random access memory (RAM), a CD-ROM, a magnetic tape, a floppy disk, an optical data storage device, and the like.

In an example embodiment, a non-transitory computer-readable storage medium including instructions is also provided, such as a memory 804 including instructions, and the instructions can be executed by the processor 820 of the terminal 800 to perform the above method. For example, the non-transitory computer-readable storage medium may be a ROM, a random access memory (RAM), a CD-ROM, a magnetic tape, a floppy disk, an optical data storage device, and the like.

As shown in FIG. 13, an embodiment of the present disclosure shows a structure of a base station. For example, the base station 900 may be provided as a network device. Referring to FIG. 13, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any method of the above methods applied to the base station.

The base station 900 may also include may also include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server^{™}, Mac OS X^{™}, Unix^{™}, Linux^{™}, FreeBSD^{™}, or the like.

Other implementations of the embodiments of the present disclosure will be apparent to those skilled in the art from consideration of the specification and practice of the invention disclosed herein. The present disclosure is intended to cover any modifications, uses or adaptive changes of the embodiments of the present disclosure, which follow the general principles of the embodiments of the present disclosure and include common knowledge or conventional technical means in the technical field that are not disclosed in the present disclosure. It is intended that the specification and examples be considered as exemplary only, with a true scope and spirit of the disclosed embodiments being indicated by the following claims.

It should be understood that the embodiments of the present disclosure are not limited to the exact structures that have been described above and shown in the drawings, and that various modifications and changes may be made without departing from the scope thereof. The scope of the embodiments of the present disclosure is limited only by the appended claims.

## Claims

1. A method for hybrid automatic repeat request (HARQ) feedback, performed by a terminal, comprising:
determining HARQ states of HARQ processes used by at least two transport blocks (TBs) in response to first downlink control information (DCI) scheduling transmissions of the at least two TBs, wherein an HARQ state is an enabled state or a disabled state; and
determining whether to perform the HARQ feedback for the transmissions of the at least two TBs based on the HARQ states.

2. The method according to claim 1, further comprising:
receiving indication information sent by an access network device, wherein the indication information indicates the HARQ states;
wherein determining the HARQ states of the HARQ processes used by the at least two TBs comprises:
determining the HARQ states of the HARQ processes used by the at least two TBs based on the HARQ states indicated by the indication information.

3. The method according to claim 2, wherein receiving the indication information sent by the access network device comprises:
receiving the indication information sent by the access network device via a first signaling,
wherein the first signaling comprises one of: DCI, a radio resource control (RRC) signaling, or a media access control (MAC) control element (CE).

4. The method according to claim 3, wherein the indication information comprises an information field, and the information field indicates the HARQ states.

5. The method according to claim 4, wherein a position of the information field in the indication information is a predetermined position, or the position of the information field in the indication information is a configurable position.

6. The method according to claim 4, wherein a length of the information field in the indication information is a predetermined length, or the length of the information field in the indication information is a configurable length.

7. The method according to claim 4, wherein the information field comprises an indication bit corresponding to a target HARQ process;
in response to the indication bit indicating a first value, the HARQ state of the target HARQ process is configured as the enabled state; or
in response to the indication bit indicating a second value, the HARQ state of the target HARQ process is configured as the disabled state; or
in response to the indication bit indicating the first value, the HARQ state of the target HARQ process is modified; or
in response to the indication bit indicating the second value, the HARQ state of the target HARQ process is not modified.

8. The method according to claim 4, wherein the information field comprises at least two indication bits corresponding to the HARQ processes of the at least two TBs respectively;
in response to an indication bit indicating a first value, the HARQ state of a corresponding HARQ process is configured as the enabled state; or
in response to an indication bit indicating a second value, the HARQ state of a corresponding HARQ process is configured as the disabled state; or
in response to an indication bit indicating the first value, the HARQ state of a corresponding HARQ process is modified; or
in response to an indication bit indicating the second value, the HARQ state of a corresponding HARQ process is not modified.

9. The method according to claim 8, wherein a bit length of the at least two indication bits is determined based on a maximum numerical count of the at least two TBs scheduled by a single piece of first DCI.

10. The method according to claim 4, wherein the information field comprises an indication bit, and the indication bit indicates the HARQ state of a predetermined HARQ process or the HARQ state of an HARQ process in a predetermined state, wherein the predetermined state is the enabled state or the disabled state.

11. The method according to claim 10, wherein a bit length of the indication bit is determined based on second configuration information.

12. The method according to claim 3, further comprising:
determining the HARQ state of a target HARQ process based on a numerical count of retransmissions indicated by the indication information.

13. The method according to claim 12, wherein determining the HARQ state of the target HARQ process based on the numerical count of retransmissions indicated by the indication information comprises:
determining the HARQ state of the target HARQ process based on the numerical count of retransmissions indicated by the indication information and a reference threshold.

14. The method according to claim 13, wherein determining the HARQ state of the target HARQ process based on the numerical count of retransmissions indicated by the indication information and the reference threshold comprises:
in response to the numerical count of retransmissions being greater than or equal to the reference threshold, determining that the HARQ state is the disabled state; and/or
in response to the numerical count of retransmissions being less than the reference threshold, determining that the HARQ state is the enabled state.

15. The method according to claim 13, further comprising:
receiving a predetermined signaling sent by the access network device,
wherein the predetermined signaling indicates the reference threshold.

16. The method according to claim 15, wherein the predetermined signaling comprises one of:
an RRC signaling;
an MAC CE signaling; or
a physical layer signaling.

17. The method according to claim 7 or 12, wherein the target HARQ process comprises one of:
some HARQ processes among the HARQ processes for the transmissions of the at least two TBs scheduled by the first DCI;
an HARQ process in the disabled state among the HARQ processes for the transmissions of the at least two TBs scheduled by the first DCI;
an HARQ process with a smallest HARQ process number among the HARQ processes for the transmissions of the at least two TBs scheduled by the first DCI; or
all HARQ processes for the transmissions of the at least two TBs scheduled by the first DCI.

18. The method according to claim 1, further comprising:
receiving third configuration information sent by an access network device,
wherein the third configuration information indicates supporting to indicate the HARQ states of the HARQ processes.

19. A method for hybrid automatic repeat request (HARQ) feedback, performed by an access network device, comprising:
sending indication information to a terminal,
wherein the indication information indicates HARQ states of HARQ processes used by at least two transport blocks (TBs) for transmissions of the at least two TBs scheduled by first downlink control information (DCI), wherein an HARQ state is an enabled state or an disabled state.

20. The method according to claim 19, wherein sending the indication information to the terminal comprises:
sending the indication information to the terminal via a first signaling,
wherein the first signaling comprises one of: DCI, a radio resource control (RRC) signaling, or a media access control (MAC) control element (CE).

21. The method according to claim 19, wherein the indication information comprises an information field, and the information field indicates the HARQ states.

22. The method according to claim 21, wherein a position of the information field in the indication information is a predetermined position, or the position of the information field in the indication information is a configurable position.

23. The method according to claim 21, wherein a length of the information field in the indication information is a predetermined length, or the length of the information field in the indication information is a configurable length.

24. The method according to claim 21, wherein the information field comprises an indication bit corresponding to a target HARQ process;
in response to the indication bit indicating a first value, the HARQ state of the target HARQ process is configured as the enabled state; or
in response to the indication bit indicating a second value, the HARQ state of the target HARQ process is configured as the disabled state; or
in response to the indication bit indicating the first value, the HARQ state of the target HARQ process is modified; or
in response to the indication bit indicating the second value, the HARQ state of the target HARQ process is not modified.

25. The method according to claim 21, wherein the information field comprises at least two indication bits corresponding to the HARQ processes of the at least two TBs respectively;
in response to an indication bit indicating a first value, the HARQ state of a corresponding HARQ process is configured as the enabled state, or
in response to the indication bit indicating a second value, the HARQ state of a corresponding HARQ process is configured as the disabled state; or
in response to the indication bit indicating the first value, the HARQ state of a corresponding HARQ process is modified, or
in response to the indication bit indicating the second value, the HARQ state of a corresponding HARQ process is not modified.

26. The method according to claim 25, wherein a bit length of the at least two indication bits is determined based on a maximum numerical count of the at least two TBs scheduled by a single piece of first DCI.

27. The method according to claim 21, wherein the information field comprises an indication bit, and the indication bit indicates the HARQ state of a predetermined HARQ process or the HARQ state of an HARQ process in a predetermined state.

28. The method according to claim 27, wherein a bit length of the indication bit is determined based on second configuration information.

29. The method according to claim 19, further comprising:
sending a predetermined signaling to the terminal,
wherein the predetermined signaling indicates a reference threshold used to determine the HARQ state.

30. The method according to claim 29, wherein the predetermined signaling comprises one of:
an RRC signaling;
an MAC CE signaling; or
a physical layer signaling.

31. The method according to claim 24, wherein the target HARQ process comprises one of:
some HARQ processes among the HARQ processes for the transmissions of the at least two TBs scheduled by the first DCI;
an HARQ process in the disabled state among the HARQ processes for the transmissions of the at least two TBs scheduled by the first DCI;
an HARQ process with a smallest HARQ process number among the HARQ processes for the transmissions of the at least two TBs scheduled by the first DCI; or
all HARQ processes for the transmissions of the at least two TBs scheduled by the first DCI.

32. The method according to claim 19, further comprising:
sending third configuration information to the terminal;
wherein the third configuration information indicates supporting to indicate the HARQ states of the HARQ processes.

33. An apparatus for hybrid automatic repeat request (HARQ) feedback, comprising:
a determination module, configured to: determine HARQ states of HARQ processes used by at least two transport blocks (TBs) in response to first downlink control information (DCI) scheduling transmissions of the at least two TBs, wherein an HARQ state is an enabled state or a disabled state; and
determine whether to perform the HARQ feedback for the transmissions of the at least two TBs based on the HARQ states.

34. An apparatus for hybrid automatic repeat request (HARQ) feedback, comprising:
a sending module, configured to send indication information to a terminal,
wherein the indication information indicates HARQ states of HARQ processes used by at least two transport blocks (TBs) for transmissions of the at least two TBs scheduled by first downlink control information (DCI), wherein an HARQ state is an enabled state or an disabled state.

35. A communication device, comprising:
an antenna;
a memory; and
a processor connected to the antenna and the memory respectively, wherein the processor is configured to, by executing computer-executable instructions stored in the memory, control transmission and reception of the antenna, and implement the method according to any one of claims 1 to 18 or 19 to 32.

36. A computer storage medium storing computer executable instructions, wherein when the computer executable instructions are executed by a processor, the method according to any one of claims 1 to 18 or 19 to 32 is implemented.
